# EUROPÄISCHE PATENTSCHRIFT

(11) **EP 2 668 065 B1**
(45) Veröffentlichungstag und Bekanntmachung des Hinweises auf die Patenterteilung: **15.07.2020**
(21) Anmeldenummer: 12700672.4
(22) Anmeldetag: 17.01.2012
(51) Int. Cl.: B60Q 1/00, B60Q 1/26, B60J 1/20, B62D 35/00

(54) **HECKBEREICH FÜR EIN KRAFTFAHRZEUG**
TAIL REGION FOR A MOTOR VEHICLE
ZONE ARRIÈRE POUR VÉHICULE AUTOMOBILE

(30) Priorität: 28.01.2011 DE 102011003339
(43) Veröffentlichungstag der Anmeldung: 04.12.2013
(73) Patentinhaber: Bayerische Motoren Werke Aktiengesellschaft, 80809 München (DE)
(72) Erfinder: HILLSTRÖM, Mats, Stefan, 85579 Neubiberg (DE); MAYER, Jochen, 85356 Freising (DE); STRELOW, Michael, 85774 Unterfoehring (DE); SOSNIK, Richard, 81479 Muenchen (DE); MORGENSTERN, Sebastian, 80809 München (DE); MEINZER, Patric, 80639 Muenchen (DE); MARKEFKA, Marc, Michael, 80639 Muenchen (DE); BÄR, Viktor, 85386 Eching (DE)
(86) Internationale Anmeldenummer: PCT/EP2012/050652
(87) Internationale Veröffentlichungsnummer: WO 2012/101007

(56) Entgegenhaltungen:
- EP-A2- 1 738 997
- JP-A- 7 025 368
- JP-U- 60 127 289
- US-A- 3 635 517
- US-A- 4 441 752

## Beschreibung

Die Erfindung betrifft einen Heckbereich für ein Kraftfahrzeug gemäß Anspruch 1.

Die DE 38 84 826 T2 beschreibt einen gattungsgemäßen Heckbereich für ein Kraftfahrzeug, mit seitlich im Heckbereich angeordneten Heckleuchten, die sich jeweils an einen sogenannten N.A.C.A. Lufteinlass in den Seitenwandabschnitten des Heckbereichs anschließen. Die bei Vorwärtsfahrt des Kraftfahrzeuges durch die N.A.C.A. Lufteinlässe kanalisierte Luftströmung tritt in eine Durchgangsöffnung im seitlichen Bereich der Heckleuchte ein und durchströmt die Heckleuchte. Der bekannte Heckbereich bietet Vorteile hinsichtlich der Verschmutzung der Heckleuchte.

Nachteilig bei dem aus der DE 38 84 826 T2 bekannten Heckbereich ist, dass sich durch die Luftführung in der Heckleuchte der Luftwiderstand des Kraftfahrzeuges erhöht.

Außerdem ist aus der JP 7 025368 A ein Kraftfahrzeug mit einer Heckleuchte bekannt, die einen Teil einer Durchgangsöffnung für eine Luftströmung im Heckbereich des Kraftfahrzeugs bildet. Hierzu weist das bekannte Kraftfahrzeug eine Lufteinlassöffnung im Seitenwandbereich auf. Die Heckleuchte hat eine vorwiegend senkrecht zur Fahrtrichtung ausgerichtete Leuchtfläche, die durch den heckseitigen Auslass der Durchgangsöffnung unterbrochen ist.

Aufgabe der Erfindung ist es, einen Heckbereich für ein Kraftfahrzeug bereitzustellen, der die aerodynamischen Eigenschaften des Kraftfahrzeugs verbessert, insbesondere eine Verkleinerung des Nachlaufgebiets des Kraftfahrzeugs bewirkt, wobei die Heckleuchte selbst großflächige aerodynamisch wirksame Bereiche aufweisen soll.

Diese Aufgabe wird durch einen Heckbereich mit den Merkmalen des Anspruchs 1 gelöst.

Kerngedanke der Erfindung ist es, die Heckleuchte in einen Hauptkörper und in einen seitlich des Hauptkörpers verlaufenden Zusatzkörper zu unterteilen, wobei der Hauptkörper zusammen mit dem Seitenwandabschnitt des Heckbereichs gezielt aerodynamisch so optimiert ist, dass sich ein geringer Luftwiderstand ergibt. Der niedrigere Luftwiderstand wird durch eine Einschnürung des Heckbereiches, auch "Heckeinzug" genannt, erreicht. Mit dieser Reduzierung der Breite des hinteren Endabschnitts des Kraftfahrzeugs geht eine Verringerung der Beladebreite und damit des Beladevolumens des Gepäckraums des Kraftfahrzeuges einher.

Erfindungsgemäß erfolgt der Lufteintritt in die Durchgangsöffnung durch eine Sicke im Seitenwandabschnitt des Heckbereichs. Durch diese Gestaltung des Heckbereichs, zusammen mit einer langgestreckten Form des Zusatzkörpers mit vergleichsweise geringer Wandstärke, wird erreicht, dass die Außenfläche des Zusatzkörpers zumindest in etwa bündig zur Kontur des Seitenwandabschnitts verläuft. Bei der Erfindung ist der maßgebliche Heckeinzug am Seitenwandabschnitt auf die Sicke beschränkt.

Um dieser Verringerung der Beladebreite entgegen zu wirken, ist der Zusatzkörper der Heckleuchte im Bereich des Seitenwandabschnittes des Heckbereiches angeordnet. Der Zusatzkörper stellt eine zusätzliche Leuchtfläche bereit, die von dem Hauptkörper der Heckleuchte abgesetzt ist. Somit kann der Hauptkörper der Heckleuchte in Breitenrichtung des Kraftfahrzeuges kleiner dimensioniert werden, mit Vorteilen für die Beladebreite des Gepäckraums. Erfindungswesentlich ist hierbei, dass der Hauptkörper der Heckleuchte in Zusammenspiel mit dem Seitenwandabschnitt des Heckbereiches gezielt nach aerodynamischen Gesichtspunkten so ausgelegt ist, dass die sich am Heckbereich ablösende Strömung ein möglichst kleines "Nachlaufgebiet" (auch "Totwassergebiet" genannt) bildet. Zusätzlich ist die kanalartige Durchgangsöffnung in der Heckleuchte (gebildet durch die Außenseite des Hauptkörpers und die Innenseite des Zusatzkörpers) aerodynamisch optimiert.

In bevorzugter Weise findet die Erfindung Anwendung bei einem Kraftfahrzeug der Limousinen- oder Coupe-Bauart, ebenso wie bei Cabrio- und Roadster-Fahrzeugen. Derartige Fahrzeuge weisen einen vom Innenraum getrennten Gepäckraum auf, der mit einer Heckklappe verschließbar ist. Auch bei entsprechenden Kraftfahrzeugen mit einem Heck- oder Mittelmotor lässt sich Erfindung in gleicher Weise anwenden. Die Heckleuchte kann mit ihrem Haupt- und Zusatzkörper an der Heckklappe angeordnet sein. Umgekehrt ist eine Anordnung der kompletten Heckleuchte am feststehenden Teil des Heckbereiches möglich. Grundsätzlich ist es jedoch auch möglich, den Hauptkörper der Heckleuchte an der Heckklappe und den Zusatzkörper der Heckleuchte am Seitenwandabschnitt des Heckbereiches anzuordnen oder umgekehrt.

Die Erfindung ist jedoch nicht auf Kraftfahrzeuge mit einem vom Innenraum getrennten Gepäckraum beschränkt. Auch Kraftfahrzeuge der Kombinationsbauart sowie sogenannte Sports Utility Vehicles oder Sports Activity Vehicles können einen erfindungsgemäßen Heckbereich aufweisen.

Grundsätzlich kann die Erfindung nicht nur bei Kraftfahrzeugen, sondern selbstverständlich auch bei Fahrzeugen ohne Antriebsaggregat Anwendung finden, wie beispielsweise bei Anhängern.

Wie oben stehend beschrieben, sind Hauptkörper und Zusatzkörper bevorzugt als Baueinheit ausgeführt, gegebenenfalls in einstückiger Ausführung. Hierbei ist der Zusatzkörper sowohl an seinem oberen als auch an seinem unteren Bereich an den Hauptkörper der Heckleuchte angebunden. Zwischen den Anbindungsbereichen befindet sich die Durchgangsöffnung für die Strömungsluft. Alternativ kann der Zusatzkörper auch eine Unterteilung zum Hauptkörper aufweisen und seinerseits beispielsweise mit dem Seitenwandabschnitt des Heckbereiches oder mit der Heckklappe direkt verbunden sein.

In einer vorteilhaften Ausführung der Erfindung hat der Zusatzkörper der Heckleuchte eine vergleichsweise geringe Bauteildicke. Während der Hauptkörper der Heckleuchte mehrere Leuchtmittel aufweist (beispielsweise für ein Rücklicht, ein Bremslicht, einen Rückfahrscheinwerfer, eine Nebelschlussleuchte und/oder einen Fahrtrichtungsanzeiger), hat der Zusatzkörper der Heckleuchte aufgrund seiner geringen Bauteildicke bevorzugt keine eigenen Leuchtmittel, sondern wird beispielsweise über einen oder mehrere Lichtleiter mit einem Leuchtmittel oder mehreren Leuchtmitteln des Hauptkörpers gekoppelt. Alternativ können im Zusatzkörper eigene Leuchtmittel mit geringem Bauraumbedarf vorgesehen sein, wie zum Beispiel Leuchtdioden. Der Zusatzkörper dient bevorzugt der Darstellung eines Rücklichtes und/oder eines Bremslichtes und/oder eines Fahrtrichtungsanzeigers.

In einer Ausgestaltung der Erfindung ist der Zusatzkörper vorderseitig mit einer vergleichsweise geringen Wandstärke und/oder mit einer gerundeten Kante versehen, um den Lufteintritt und die Umströmung bei Fahrt des Kraftfahrzeuges möglichst widerstandsarm zu gestalten. Außerdem sollen sich an der Vorderkante des Zusatzkörpers keine Ablösungen der Strömungsluft bilden.

In weiterer Ausgestaltung der Erfindung ist der endseitige Bereich des Zusatzkörpers vergleichsweise scharfkantig ausgebildet, so dass der Luftstrom, der entlang der Innenseite und entlang der Außenseite des Zusatzkörpers strömt, gezielt abreißt.

Bevorzugt ist die Höhenerstreckung der Durchgangsöffnung größer als deren Breitenerstreckung, wodurch ein Luftstrom erzielt wird, der sich über einen nennenswerten Teil der Höhenerstreckung des Heckbereichs des Kraftfahrzeuges erstreckt.

Die aerodynamisch wirksamste Form und die entsprechenden Größenverhältnisse von Hauptkörper, Zusatzkörper, Durchgangsöffnung und Seitenwandabschnitt variieren je nach Art des Kraftfahrzeugs und sind durch Berechnung (Computational Fluid Dynamics CFD, das heißt numerische Strömungsmechanik) und/oder Versuche in mehreren Optimierungsschleifen zu ermitteln.

Der für eine Verkleinerung des Nachlaufgebiets maßgebliche "Heckeinzug" wird erreicht, indem der Seitenwandabschnitt des Heckbereichs und die Außenkontur des Hauptkörpers der Heckleuchte unter einem kleinen Winkel gegenüber der Fahrtrichtung fahrzeugeinwärts angestellt werden. Dieser Winkel beträgt beispielsweise etwa zwischen 5° und 25°, bevorzugt zwischen 10° und 20°. Der Winkel, unter dem der Seitenwandabschnitt einerseits und die Außenkontur des Hauptkörpers der Heckleuchte andererseits gegenüber der Fahrtrichtung angestellt sind, ist bevorzugt in etwa gleich groß. Selbstverständlich können die Winkel auch unterschiedlich sein.

Der Heckeinzug kann - im Schnitt entlang einer Horizontalebene betrachtet - im Wesentlichen geradlinig erfolgen. Bevorzugt erfolgt der Heckeinzug "progressiv" (im Sinn einer leichten Einwärtswölbung). Eine Einwärtswölbung zum Fahrzeugheck hin wird auch als Bombierung bezeichnet. Im Fall einer Bombierung beziehen sich die oben stehenden Winkelangaben auf die Sehne durch die Endpunkte der Wölbung. Wesentlich ist, dass der Heckeinzug gleichmäßig erfolgt, also ohne "Knicke" und/oder "Sprünge", um eine vorzeitige Ablösung der Strömung zu verhindern.

In Höhenrichtung des Kraftfahrzeugs betrachtet erstreckt sich der Heckeinzug üblicherweise nur über einen Teil der Höhenerstreckung des Heckbereichs. Selbstverständlich kann der Heckeinzug jedoch auch über die gesamte oder über nahezu die gesamte Höhenerstreckung des Heckbereichs ausgebildet sein. Für die Erfindung ist jedoch nicht alleine der Heckeinzug des Seitenwandabschnitts (und gleichwirkend eventuell zusätzlich auch der Heckeinzug einer hinteren Seitenscheibe und/oder einer hinteren Karosseriesäule bei einem Sports Utility Vehicle, einem Sports Activity Vehicle oder einem Kraftfahrzeug der Kombinationsbauart etc.), sondern auch dessen Zusammenwirken mit der Heckleuchte maßgeblich. Da Heckleuchten sich üblicherweise nur entlang eines Teils der Höhenerstreckung des Heckbereichs verlaufen, ist die mit der Erfindung unmittelbar erreichte Wirkung auf die Höhenerstreckung der Heckleuchte beschränkt.

In Zusammenhang mit der vorliegenden Erfindung beziehen sich alle Angaben zur Position von Komponenten des Kraftfahrzeugs auf deren Einbaulage im Kraftfahrzeug. Alle Angaben zur Aerodynamik und Umströmung beziehen sich auf die Vorwärtsfahrt des Kraftfahrzeugs.

Ein mögliches Ausführungsbeispiel der Erfindung ist in der Zeichnung dargestellt und wird nachfolgend näher beschrieben. Es zeigt:
- Fig. 1: eine schematische Darstellung zweier unterschiedlich breiter Heckbereiche von Kraftfahrzeugen, mit Veranschaulichung der aerodynamischen Wirkung,
- Fig. 2: eine perspektivische Ansicht auf einen erfindungsgemäßen Heckbereich eines Kraftfahrzeuges,
- Fig. 3: einen vergrößerten Ausschnitt des Gegenstands von Fig. 2 und
- Fig. 4: eine Schnittdarstellung entlang der Schnittverlaufslinie IV - IV in Fig. 3.

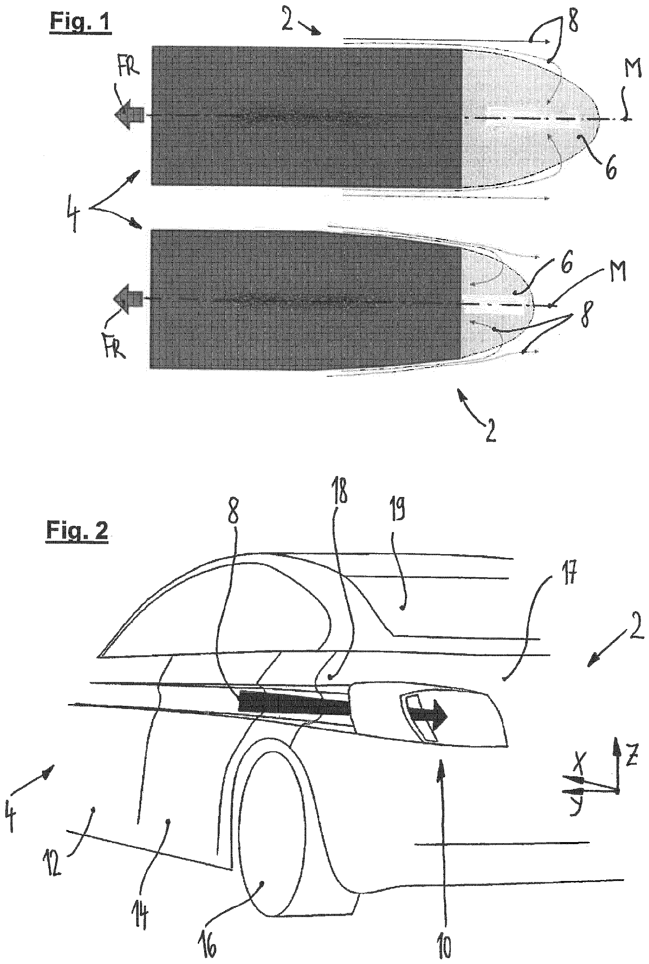

Fig. 1 zeigt den Heckbereich 2 eines Kraftfahrzeugs 4 in schematischer Draufsicht. Die Fahrtrichtung ist mit FR bezeichnet. Grundsätzlich bietet an einem Kraftfahrzeug 4 der Heckbereich 2 "die letzte Möglichkeit", die Umströmung des Kraftfahrzeuges 4 zu beeinflussen. Am Heckbereich 2 des Kraftfahrzeuges reißt nämlich die Strömung (dargestellt durch Pfeile 8) ab und vermischt sich in einem mit 6 bezeichneten Nachlaufgebiet mit der Abströmung vom Unterboden und von der Oberseite des Kraftfahrzeuges 4. Ein Kraftfahrzeug 4 mit einem starken Heckeinzug, also ein Kraftfahrzeug 4 mit einem "schmalen Heck", wie im unteren Teil der Darstellung der Fig. 1 abgebildet, hat hierbei aerodynamische Vorteile gegenüber einem Kraftfahrzeug 4 mit einem "breitem Heck", wie im oberen Teil der Darstellung von Fig. 1 abgebildet.

Wie sich anschaulich aus Fig. 1 ergibt, weist ein Kraftfahrzeug 4 mit einem starken Heckeinzug Nachteile bei der Beladebreite und dem Gepäckraumvolumen auf. Umgekehrt weist ein Kraftfahrzeug mit einem breiten Heck Nachteile hinsichtlich der Aerodynamik auf, da sich hier ein größeres Nachlaufgebiet 6 und damit ein geringerer Druck auf die Heckbasisfläche einstellt. Das Nachlaufgebiet 6 ist eine Unterdruckzone hinter dem Kraftfahrzeug 4, durch die für die Vorwärtsbewegung des Kraftfahrzeugs 4 ein erhöhter Energiebedarf erforderlich ist. Mit Verringerung des Nachlaufgebiets 6 reduziert sich der Unterdruck, der auf die Heckbasisfläche, also die Rückseite des Heckbereichs 2 wirkt, so dass sich der Luftwiderstandsbeiwert des Kraftfahrzeugs 4 reduziert.

Hier setzt die Erfindung an, die anhand der Fig. 2 bis 4 beispielhaft dargestellt ist. Die Darstellungen der Fig. 2 bis 4 zeigen jeweils die linke Seite des Kraftfahrzeuges 4. Wie in Fig. 1 durch eine strichpunktierte Fahrzeugmittenebene M symbolisiert, ist das Kraftfahrzeug 4 im Wesentlichen achsensymmetrisch zur Fahrzeugmittenebene M gestaltet.

Durch erfindungsgemäße Heckleuchten 10 wird in aerodynamisch günstiger Weise ein vergleichsweise starker Heckeinzug ermöglicht, wobei die Einschränkungen in Bezug auf die Beladebreite und auf das Gepäckraumvolumen, die sich bei einem Kraftfahrzeug nach dem Stand der Technik ergeben, durch die erfindungsgemäße Ausgestaltung der Heckleuchten 10 zumindest teilweise ausgeglichen werden. Hierzu ist der Heckbereich 2 des Kraftfahrzeuges 4 wie folgt gestaltet.

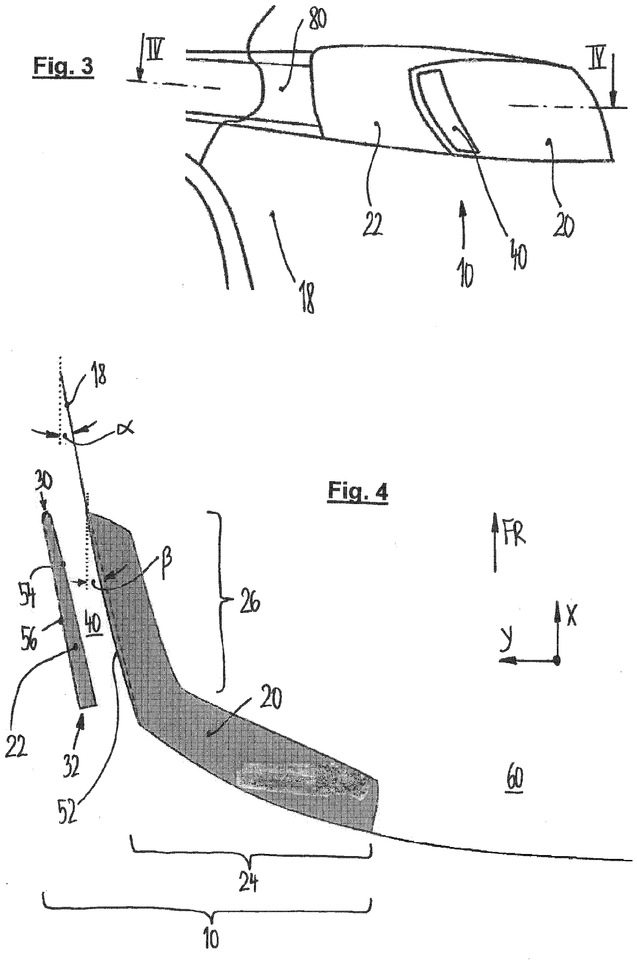

Das Kraftfahrzeug 4 ist ein Fahrzeug der Limousinen-Bauart, bei dem sich an vordere und hintere Türen 12 bzw. 14 im Bereich eines Hinterrades 16 ein Seitenwandabschnitt 18 des Heckbereichs 2 anschließt. Der Heckbereich 2 weist eine Heckleuchte 10 auf, die in Fig. 3 vergrößert und in Fig. 4 im Horizontalschnitt dargestellt ist.

Die Heckleuchte 10 ist in einen Hauptkörper 20 und in einen Zusatzkörper 22 unterteilt. Der Hauptkörper 20 erstreckt sich einerseits in einer Richtung Y quer zur Fahrtrichtung FR, die mit der Längsrichtung X des Kraftfahrzeuges 4 identisch ist. Außerdem erstreckt sich der Hauptkörper 20 der Heckleuchte 10 im Seitenwandabschnitt 18 des Heckbereichs in Fahrzeuglängsrichtung X. Der Hauptkörper 20 weist nicht dargestellte Leuchtmittel auf, für ein Bremslicht und/oder ein Rücklicht und/oder ein Fahrtrichtungsanzeiger und/oder ein Rückfahrscheinwerfer und/oder eine Nebelschlussleuchte. Die in Y-Richtung verlaufenden Abschnitte der Heckleuchte 10 sind mit 24 bezeichnet, die in X-Richtung verlaufenden Abschnitte mit 26. Oberhalb der Heckleuchte 10 schließt sich eine Heckklappe 17 an, die sich unterhalb einer Heckscheibe 19 des Kraftfahrzeuges 4 befindet.

Im Bereich seitlich des Hauptkörpers 20 der Heckleuchte 10 ist der Zusatzkörper 22 angeordnet, der eine langgestreckte Form mit vergleichsweise geringer Wandstärke aufweist. Der vordere Endabschnitt 30 des Zusatzkörpers 22 ist gerundet. Somit bietet der vordere Endabschnitt 30 einen geringen Luftwiderstand für die Strömung 8. Der hintere Endabschnitt 32 ist scharfkantig ausgebildet und stellt somit eine Abrisskante für die Strömung 8 dar.

Hauptkörper 20 und Zusatzkörper 22 bilden eine Durchgangsöffnung 40 für die Strömung 8. Die Durchgangsöffnung 40 ist kanalartig ausgebildet und weist im vorliegenden Ausführungsbeispiel einen etwa gleichbleibenden Durchtrittsquerschnitt auf. Alternativ kann sich der Querschnitt der Durchgangsöffnung 40 auch entgegen der Fahrtrichtung FR nach hinten erweitern, zur Erzeugung einer Diffusorwirkung.

Wie insbesondere aus Fig. 4 hervorgeht und auch aus der schematischen Darstellung im unteren Teil der Fig. 1 ersichtlich ist, weist der Heckbereich 2 des Kraftfahrzeuges 4 einen vergleichsweise starken Heckeinzug auf. Somit liegt eine Ausgestaltung des Heckbereiches 2 des Kraftfahrzeuges 4 entsprechend der unteren Darstellung in Fig. 1 vor. Hierdurch ergibt sich eine aerodynamisch günstige Umströmung 8 des Heckbereichs 2.

Der Heckeinzug wird einerseits durch eine Schrägstellung des Seitenwandabschnitts 18 des Heckbereichs 2 gegenüber der Fahrtrichtung FR erreicht. Im vorliegenden Horizontalschnitt ist der Winkel α des Heckeinzugs entlang des Verlaufs des dargestellten Seitenwandabschnittes 18 etwa gleichbleibend und beträgt etwas mehr als 10°.

Der Heckeinzug des Seitenwandabschnitts 18 setzt sich andererseits in der Außenfläche 52 des Hauptkörpers 20 der Heckleuchte 10 fort. Die Außenfläche 52 ist im vorliegenden Horizontalschnitt leicht gewölbt, hat also einen "progressiven" Heckeinzug, das heißt einen Heckeinzug, der entgegen der Fahrtrichtung FR zunimmt. Der Winkel β, um den die Außenfläche 52 im Mittel gegenüber der Fahrtrichtung FR angestellt ist (dargestellt durch die Sehne zwischen den Endpunkten der Außenfläche 52) beträgt knapp 15°.

Um die mit dem Heckeinzug einhergehende Verringerung der Beladebreite des Gepäckraums 60 auszugleichen, ist seitlich des Hauptkörpers 20 der Heckleuchte 10 der Zusatzkörper 22 angeordnet. Dieser Zusatzkörper 22 stellt eine zusätzliche Leuchtfläche dar, so dass der Hauptkörper 20 in Breitenerstreckung Y des Kraftfahrzeuges 4 kleiner dimensioniert werden kann. Bevorzugt hat der Zusatzkörper 22 die Funktion eines Rücklichtes und/oder eines Bremslichtes und/oder eines Fahrtrichtungsanzeigers. Hierbei sind die gesetzlichen Vorgaben hinsichtlich der Position und der Größe der Leuchtflächen sowie weitere gesetzliche Bestimmungen zu beachten. Diese weiteren Bestimmungen geben beispielsweise vor, dass kein rotes Licht (Bremslicht, Rücklicht, Nebelschlusslicht) entgegen der Fahrtrichtung FR, also nach vorne, austreten darf. Das bedeutet, dass die vordere Fläche des Zusatzkörpers 22 gegenüber dem Austritt von rotem Licht nach vorne abgetrennt sein muss. Ohne Weiteres hingegen kann der Zusatzkörper 22 die Funktion eines Fahrtrichtungsanzeigers wahrnehmen, der von einem seitlich des Kraftfahrzeugs 4 oder von einem vor dem Kraftfahrzeug 4 befindlichen Betrachter wahrgenommen werden kann.

Da der Zusatzkörper 22 entsprechend dem Heckeinzug des Seitenwandabschnitts 18 ebenfalls in Richtung des Fahrzeughecks einwärts gewölbt ist, ist die Außenfläche 56 des Zusatzkörpers 22 in der Projektion von einem hinter dem Kraftfahrzeug 4 befindlichen Betrachter ebenfalls als Leuchtfläche sichtbar. Somit kann im Zusatzkörper 22 neben einem Fahrtrichtungsanzeiger oder alternativ zu einem Fahrtrichtungsanzeiger ein Rücklicht und/oder ein Bremslicht vorgesehen sein.

Die in der Projektion in Fahrtrichtung FR sichtbare gewölbte Außenfläche 56 des Zusatzkörpers 22 vergrößert zudem optisch die Breite des Heckbereichs 2 des Kraftfahrzeugs 4.

Die Leuchtfläche des Zusatzkörpers 22 weist aufgrund der geringen Bauteildicke des Zusatzkörpers 22 bevorzugt keine eigenen Leuchtmittel auf, sondern wird über Lichtleiter oder dergleichen an Leuchtmittel im Hauptkörper 20 der Heckleuchte 10 gekoppelt.

Maßgeblich für den eingangs beschriebenen Effekt eines verkleinerten Nachlaufgebietes 6 ist die durch den Seitenwandabschnitt 18 und die Außenfläche 52 des Hauptkörpers 20 der Heckleuchte 10 bewirkte Heckeinzug, also die Querschnittsverringerung des Heckbereichs 2 an der rechten und an der linken Seite des Kraftfahrzeugs 4. Zusätzlich kann auch die Gestaltung der Innenfläche 54 des Zusatzkörpers 22 und insgesamt die Ausgestaltung der Durchgangsöffnung 40 die aerodynamischen Eigenschaften des Heckbereichs 2 beeinflussen. Auch die Außenfläche 56 des Zusatzkörpers 22 wirkt sich auf die aerodynamischen Eigenschaften des Kraftfahrzeugs 4 aus.

Voraussetzung für eine wirksame Verkleinerung des Nachlaufgebietes 6 durch einen Heckeinzug des Heckbereichs 2 ist, dass der Heckeinzug bereits frühzeitig am Seitenwandabschnitt 18 anfängt, wie aus den Fig. 1 unterer Teil und aus Fig. 4 anschaulich hervorgeht. Bei einem starken Heckeinzug auf einer zu kleiner Strecke in X-Richtung würde die Strömung 8 frühzeitig ablösen, mit Nachteilen hinsichtlich der Aerodynamik.

Insbesondere in Fig. 2 ist zu erkennen, dass der Lufteintritt in die kanalartige Durchgangsöffnung 40 durch eine Sicke 80 im Seitenwandabschnitt 18 des Heckbereichs 2 erfolgt. Durch diese Gestaltung des Heckbereichs 2 wird erreicht, dass die Außenfläche 56 des Zusatzkörpers 22 zumindest in etwa bündig zur Kontur des Seitenwandabschnitts 18 verläuft. Bei dieser Ausführungsform der Erfindung ist der maßgebliche Heckeinzug am Seitenwandabschnitt 18 auf die Sicke 80 beschränkt, wobei die Außenfläche 52 des Hauptkörpers 20 der Heckleuchte 10 den Heckeinzug fortsetzt. Oberhalb und/oder unterhalb der Sicke 80 kann ebenfalls ein mehr oder weniger starker Heckeinzug des Heckbereichs 2 vorliegen, jedoch ohne Zusammenspiel mit der Heckleuchte 10. Somit beschränkt sich die erfindungsgemäße Wirkung auf die Höhenerstreckung (Z-Richtung) der Sicke 80 und damit auf die Höhenerstreckung der Heckleuchte 10, genauer gesagt auf die Höhenerstreckung der Durchgangsöffnung 40.

Die Erfindung lässt sich wie folgt zusammenfassen: Der Heckbereich 2 eines erfindungsgemäßen Kraftfahrzeugs 4 weist Heckleuchten 10 auf, die in einen Hauptkörper 20 und in einen Zusatzkörper 22 unterteilt sind. Der Heckbereich 2 ist aerodynamisch vorteilhaft gestaltet, indem zusätzlich zu einem "Heckeinzug" des Seitenwandabschnitts 18 des Heckbereichs 2 auch die Außenkontur des Hauptkörpers 20 der Heckleuchte 10 diesem "Heckeinzug" folgt. Hierdurch ergibt sich bei Fahrt des Kraftfahrzeugs 4 am Heckbereich 2 ein vergleichsweise kleines Nachlaufgebiet 6 der Strömung 8. Durch die Ausgestaltung des Zusatzkörpers 22 als Leuchtfläche ist es möglich, die Breite des Hauptkörpers 20 der Heckleuchte 10 gering zu halten, so dass die Reduzierung des Gepäckraumvolumens und der Beladebreite des Gepäckraums 60, die sich aus dem "Heckeinzug" ergeben, zumindest teilweise ausgeglichen werden.

## Patentansprüche

1. Heckbereich (2) für ein Kraftfahrzeug, mit einer rechten und einer linken Heckleuchte (10), wobei
- jede Heckleuchte (10) zumindest eine Durchgangsöffnung (40) für die Durchströmung mit Luft aufweist,
- die Heckleuchte (10) einen Hauptkörper (20) sowie einen seitlich des Hauptkörpers (20) verlaufenden Zusatzkörper (22) aufweist,
- wobei der Hauptkörper (20) Leuchtmittel aufweist,
- der Zusatzkörper (22) eine langgestreckte Form mit vergleichsweise geringer Wandstärke aufweist,
- die Durchgangsöffnung (40) zwischen der Außenseite (52) des Hauptkörpers (20) und der Innenseite (54) des Zusatzkörpers (22) gebildet ist,
- ein Seitenwandabschnitt (18) des Heckbereichs (2) und die Außenseite (52) des Hauptkörpers (20) der Heckleuchte (10) unter einem Winkel (α, β) gegenüber der Fahrtrichtung (FR) fahrzeugeinwärts gerichtet sind,
- die Heckleuchte (10) an einer Sicke (80) des Seitenwandabschnitts (18) angeordnet ist, so dass die Außenfläche (56) des Zusatzkörpers (22) zumindest in etwa bündig zur Kontur des Seitenwandabschnitts (18) verläuft und
- der Zusatzkörper (22) eine zusätzliche Leuchtfläche darstellt.

2. Heckbereich nach Anspruch 1,
**dadurch gekennzeichnet, dass** es sich um den Heckbereich (2) eines Kraftfahrzeugs (4) der Limousinen-, Coupé-, Cabrio- oder Roadster-Bauart handelt.

3. Heckbereich nach Anspruch 2,
**dadurch gekennzeichnet, dass** die Heckleuchte (10) an einer Heckklappe (19) des Gepäckraums (60) des Kraftfahrzeugs (4) angeordnet ist.

4. Heckbereich nach einem der vorgenannten Ansprüche,
**dadurch gekennzeichnet, dass** der Hauptkörper (20) mehrere Leuchtmittel aufweist und wenigstens ein Lichtleiter vorgesehen ist, dessen Lichteinlassöffnung an wenigstens einem der Leuchtmittel ansetzt und dessen Lichtaustrittsöffnung sich im Zusatzkörper befindet.

5. Heckbereich nach einem der vorgenannten Ansprüche,
**dadurch gekennzeichnet, dass** der Zusatzkörper (22) an seinem fahrtrichtungszugewandten Endabschnitt (30) gerundet ist.

6. Heckbereich nach einem der vorgenannten Ansprüche,
**dadurch gekennzeichnet, dass** der Zusatzkörper (22) an seinem fahrtrichtungsabgewandten Endabschnitt (32) eine Abrisskante (33) aufweist.

7. Heckbereich nach einem der vorgenannten Ansprüche,
**dadurch gekennzeichnet, dass** die Höhenerstreckung der Durchgangsöffnung (40) größer ist als die Breitenerstreckung der Durchgangsöffnung (40).

## Claims

1. Tail region (2) for a vehicle, having a right and a left tail lamp (10), wherein
- each tail lamp (10) has at least one through-opening (40) for the through-flow of air,
- the tail lamp (10) has a main body (20) and an additional body (22) extending laterally with respect to the main body (20),
- wherein the main body (20) has light-emitting means,
- the additional body (22) has an elongated shape with a comparatively low wall thickness,
- the through-opening (40) is formed between the outer side (52) of the main body (20) and the inner side (54) of the additional body (22),
- a side wall portion (18) of the tail region (2) and the outer side (52) of the main body (20) of the tail lamp (10) are oriented toward the inside of the vehicle at an angle (α, β) with respect to the driving direction (FR),
- the tail lamp (10) is arranged on a swage line (80) of the side wall portion (18) so that the outer surface (56) of the additional body (22) extends at least approximately flush with the contour of the side wall portion (18) and
- the additional body (22) represents an additional light-emitting surface.

2. Tail region according to Claim 1,
**characterized in that** it is the tail region (2) of a motor vehicle (4) of the saloon, coupe, cabriolet or roadster type.

3. Tail region according to Claim 2,
**characterized in that** the tail lamp (10) is arranged on a tailgate (19) of the bootspace (60) of the motor vehicle (4) .

4. Tail region according to one of the aforementioned claims,
**characterized in that** the main body (20) has a plurality of light-emitting means, and at least one light guide having a light inlet opening that starts at at least one of the light-emitting means and having a light exit opening that is located in the additional body is provided.

5. Tail region according to one of the aforementioned claims,
**characterized in that** the additional body (22) is rounded at its end portion (30) facing the driving direction.

6. Tail region according to one of the aforementioned claims,
**characterized in that** the additional body (22) has at its end portion (32) facing away from the driving direction a separating edge (33).

7. Tail region according to one of the aforementioned claims,
**characterized in that** the height extent of the through-opening (40) is greater than the width extent of the through-opening (40).

## Revendications

1. Zone arrière (2) pour un véhicule automobile, comprenant un feu arrière (10) gauche et un droit,
- chaque feu arrière (10) possédant au moins une ouverture de passage (40) pour la traversée par un courant d'air,
- le feu arrière (10) possédant un corps principal (20) ainsi qu'un corps supplémentaire (22) qui suit un tracé latéralement au corps principal (20),
- le corps principal (20) possédant des moyens lumineux,
- le corps supplémentaire (22) possédant une forme allongée avec une épaisseur de paroi relativement faible,
- l'ouverture de passage (40) étant formée entre le côté extérieur (52) du corps principal (20) et le côté intérieur (54) du corps supplémentaire (22),
- une portion de paroi latérale (18) de la zone arrière (2) et le côté extérieur (52) du corps principal (20) du feu arrière (10) étant orientés selon un angle (α, β) donné vers l'intérieur du véhicule par rapport à la direction de déplacement (FR),
- le feu arrière (10) étant disposé au niveau d'une moulure (80) de la portion de paroi latérale (18) de sorte que la surface extérieure (56) du corps supplémentaire (22) suit un tracé au moins approximativement à fleur du contour de la portion de paroi latérale (18) et
- le corps supplémentaire (22) représentant une surface lumineuse supplémentaire.

2. Zone arrière selon la revendication 1, **caractérisée en ce qu'**il s'agit de la zone arrière (2) d'un véhicule automobile (4) de type berline, coupé, cabriolet ou décapotable.

3. Zone arrière selon la revendication 2, **caractérisée en ce que** le feu arrière (10) est disposé au niveau d'un hayon (19) du coffre à bagages (60) du véhicule automobile (4).

4. Zone arrière selon l'une des revendications précédentes, **caractérisée en ce que** le corps principal (20) possède plusieurs moyens lumineux et au moins un guide de lumière est présent, dont l'ouverture d'entrée de lumière repose sur au moins l'un des moyens lumineux et dont l'ouverture de sortie de lumière se trouve dans le corps supplémentaire.

5. Zone arrière selon l'une des revendications précédentes, **caractérisée en ce que** le corps supplémentaire (22) est arrondi au niveau de sa portion d'extrémité (30) qui fait face à la direction de déplacement.

6. Zone arrière selon l'une des revendications précédentes, **caractérisée en ce que** le corps supplémentaire (22) possède une arête de décrochage (33) au niveau de sa portion d'extrémité (32) à l'opposé de la direction de déplacement.

7. Zone arrière selon l'une des revendications précédentes, **caractérisée en ce que** l'extension en hauteur de l'ouverture de passage (40) est plus grande que l'extension en largeur de l'ouverture de passage (40).
